# EUROPEAN PATENT APPLICATION

(11) **EP 0 742 124 A1**
(43) Date of publication of application: **13.11.1996**
(21) Application number: 96303097.8
(22) Date of filing: 02.05.1996
(51) Int. Cl.: B60R 21/20

(54) **Serviceable rivet for passenger side module assembly**

(30) Priority: 09.05.1995 US 369943
(71) Applicant: MORTON INTERNATIONAL, INC., Chicago, Illinois 60606 (US)
(72) Inventor: Klages, William R., Auburn Hills, MI 48326 (US); Whited, Timothy J., Auburn Hills, MI 48326 (US)
(74) Representative: Bankes, Stephen Charles Digby

(57) **Abstract**

A reaction can for housing and positioning the gas generator and inflatable bag of a vehicle passive restraint system comprising a trough shaped body part (10) with end-caps (30) affixed to the ends thereof. The end-caps are assembled to the body part with hollow externally threaded fasteners (20) that are inserted into apertures in the end-caps and body part. Controlled expansion of the hollow fasteners provide cold formed mating threads in the body part which act in concert with the hollow fastener to clamp the assembly together.

## Description

This invention relates to an inflation passive restraint system for use in an automobile for restraining the movement of a seated occupant during a collision, and more particularly, to an improvement in the structure for housing and positioning the gas generator and inflatable bag on the passenger side of the vehicle.

The housing structure of a vehicle passive restraint system provides protection for the gas generator and the inflatable bag until the time of deployment of the latter. Additionally, it absorbs the loads generated by deployment of the bag. These loads are large and unless sufficiently absorbed can cause damage to the vehicle interior including dash panel parts. Thus, it has been the practice in the prior art to use steel and aluminum structures for housing and positioning passenger inflators to prevent such damage.

Emphasis on weight reduction in automobiles has created a need, and a demand, for a lighter weight passenger side inflation passive restraint system. It has been determined that a most significant weight reduction in the system can be achieved by the substitution of aluminum for the heavy steel structure used to house and position the gas generator and the inflatable bag.

Aluminum already is being used in the external housing as well as the internal structure of gas generators. Such usage is disclosed in U.S. Pat. No. 4,547,342, issued Oct. 15, 1985, U.S. Pat. No. 4,561,675, issued Dec. 31, 1985 to Gary V. Adams et al. for driver inflation passive restraint systems and U.S. Pat. No. 4,941,678, issued July 17, 1990 to Donald R. Lauritzen et al. All of said patents are assigned to the assignee of the present invention.

An object of the invention is to provide improvements in the structure for housing and positioning the gas generator and inflatable bag of a passenger side inflation passive restraint system that enable a significant reduction in cycle time while still allowing for serviceability.

Another object of the invention is to provide a structure embodying such improvements, specifically, a simple can assembly, hereinafter termed a reaction can, which meets the high reliability standards of a safety device and at the same time can be manufactured in high production rates at low cost.

In accomplishing these and other objectives of the invention, there is provided an aluminum reaction can for housing and positioning the gas generator and inflatable bag of a passive restraint system comprising a trough shaped body part and a plate for each end thereof. The only requirement for the can body material is that it is amenable to forming the body via an extrusion process. Further, the material must be compatible to the assembly process. That is, the RIVSCREW fastener that is used to assemble the end-caps to the can body must be able to cold form threads in the screw slots provided in the can body. Thus, the can body material must be softer than the RIVSCREW material. The fabrication of the body part is of continuous aluminum extrusion in accordance with techniques known in the art. This enables the provision of a light strong body part with thickening of material weight only where it is needed. Being a continuous length it can be cut to lengths accommodating a variety of generator lengths. Extrusion of the body part also allows the provision of an integral bag ring retaining shelf, screw slots for attaching the end plates, stop lugs for adding, externally of the gas generator, gas modifying screens, and slots for attachment of a protective cover for the bag.

The end plates are made of stamped steel and thus enable a reduction in the amount of machining required. Different materials can be used for the end plates as long as they met the module design and performance specifications. The end plates retain the shape of the body part, hold the gas generator in place, properly indexed, and provide attachment flanges.

The various features of novelty which characterize the invention are pointed out with particularity in the claims annexed to and forming a part of this specification. For a better understanding of the invention, its operating advantages, and specific objects attained by its use, reference is made to the accompanying drawings and descriptive matter in which a preferred embodiment of the invention is illustrated.

FIG. 1 is a perspective view of the extruded aluminum body and a stamped steel end-cap.

FIG. 2 is an end view of the extruded aluminum body part.

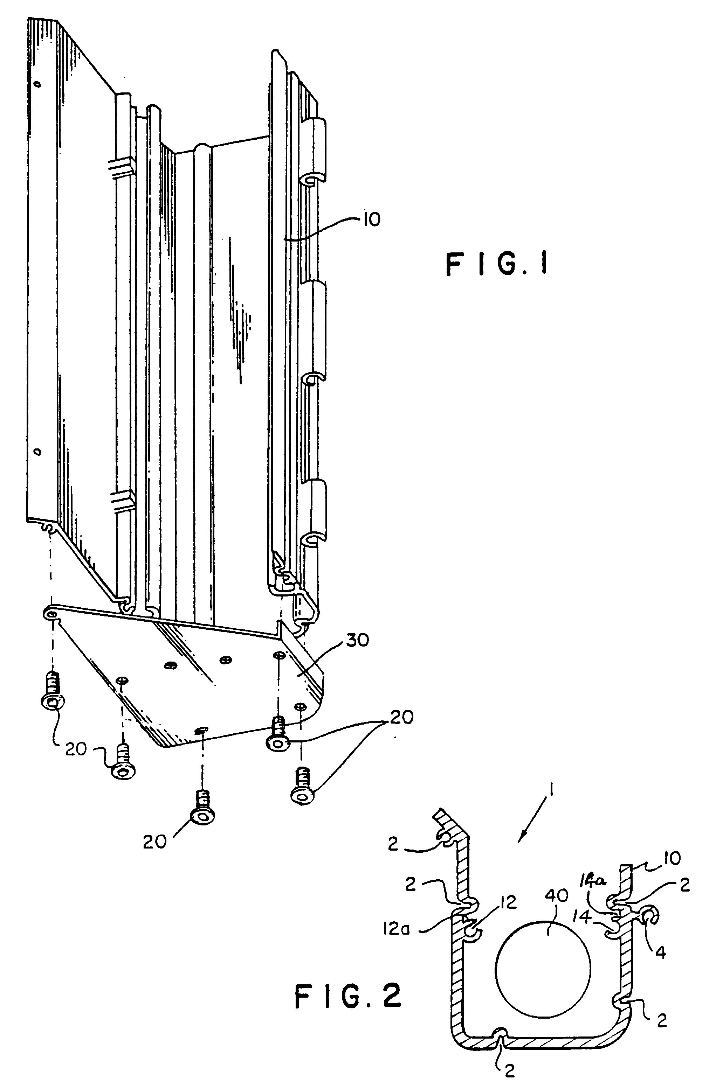

An aluminum reaction can **1** according to the invention, as shown in the drawings, includes an elongated body part **10**. Body part **10**, as seen in FIGS. 1 and 2, has the form of an asymmetrical long, narrow, open receptacle or trough having opposite side walls and a partially rounded bottom wall. Formed on the inner side of each of the walls of the body part **10**, adjacent to but spaced from the upper edges thereof, is a notch. These notches, designated by reference numerals **12** and **14**, respectively, form a respectively associated bag retaining ring shelf **12a** and **14a** for retaining a continuous attachment ring (not shown) for attaching a conventional inflatable bag (not shown) as known in the art.

Also formed in the body part **10** on the outer side wall adjacent an upper edge thereof is a respectively associated groove 4 for retaining a conventional cover (now shown) for the reaction can 1. Additionally, five spaced retaining screw grooves 2, are provided at each end of the body part **10** for retaining thereat a respectively associated end-cap 30.

The fabrication of the body part **10** may be of continuous aluminum extrusion and may be cut to lengths accommodating a variety of lengths of the gas generator employed in the restraint system. The end plates **30** may be made of steel and have a stamped shape that reduces the amount of machining required. The end plates **30** retain the shape of the elongated body part **10** and hold an elongated cylindrical gas generator **40** in place.

Generator 40 may be of any conventional type such as those disclosed in the aforementioned Lauritzen et. al. patent.

In the preferred embodiment end-caps 30 are attached to the body part **10** by RIVSCREW fasteners 20 manufactured by Advel. RIVSCREW fasteners 20 are externally threaded self-locking type fasteners which are typically made of steel and zinc plated to resist corrosion. RIVSCREW fasteners are typically magazine loaded onto a reusable hexagon-shaped mandrel and placed in a conventional tool barrel. The fastener is placed in the prepared hole in the end-cap and body part 10. Tool activation draws the hexagon-shaped mandrel through the fastener causing controlled expansion which cold forms mating threads in the aluminum body part. As the mandrel is drawn completely through the fastener it creates a hexagonal shaped bore, facilitating easy fastener removal. During installation a domed head is formed on the RIVSCREW achieving high clinch and secure clamping. The mandrel action also leaves a hexagonal bore in the RIVSCREW facilitating easy removal and reinstallation with a standard hex wrench when required.

Although the preferred embodiment describes the use of RIVSCREW fasteners, those skilled in the art will readily understand that any hollow externally threaded fastener means capable of being cold expanded to form mating threads in the reaction can, can be employed.

Thus, in accordance with the invention, there has been provided an improvement in assembling the structure for housing and positioning the gas generator and inflatable bag of a passenger side inflation passive restraint system. The invention is characterized in its use of an externally threaded hollow fastener means for forming cold threads in the reaction can housing. The cold formed threads allow the fastener to be removed and reinstalled while obtaining ample clamp-up of the end-caps to the can housing

## Claims

1. A method for securing the end-caps (30) to a reaction can (10) for vehicle passenger inflator modules which comprise the steps of placing hollow externally threaded fastener means (20) through prepared holes in the end-caps and into holes or grooves (2) in the reaction can and cold forming mating threads in the side walls of the holes or grooves in the reaction can by controlled expansion of said hollow externally threaded means.

2. A method according to claim 1 wherein the hollow externally threaded means (2) are magazine loaded onto a reusable mandrel for placement through the prepared holes in the end-caps (30) and into the holes or grooves (2) in the reaction can (10).

3. A method according to claim 2 wherein the mandrel has a hexagonal-shaped terminus which is withdrawn through the hollow externally threaded means (2) to cause controlled expansion and form a hexagonal shaped bore in said hollow means.

4. A method according to any preceding claim wherein during installation a domed head is formed on the hollow externally threaded means (2) achieving high clinch and secure clamp up of the end-caps (30).

5. A method according to any preceding claim wherein the reaction can (10) comprises an aluminium extrusion and the end-caps (30) are made of stamped steel.

6. A reaction can for vehicle passenger inflators (40) comprising
a trough shaped body part (10) having opposite ends, opposite side walls, and a bottom wall with an inflatable bag ring retaining notch (12, 14) on the inner side of each side wall, said body part further having inflatable bag cover retaining grooves (4) on the outer side of each side wall,
and a plurality of end plate attachment holes or grooves (2) at each of its ends, first and second end-caps (30) attached to respectively associated opposite ends of said body part by means positioned in cooperative relation with the respective end plate attachment holes or grooves,
characterised in that said end plates are secured to said body part by externally threaded hollow fastener means (20) that are expanded during installation to cold form mating threads in the attachment holes or grooves (2).

7. A reaction can according to claim 6 wherein the trough shaped body part (10) comprises an aluminium extrusion, the end-caps (30) are made of stamped steel and the externally threaded fastener means (20) are comprised of steel.
